# EUROPÄISCHE PATENTSCHRIFT

(11) **EP 1 535 759 B1**
(45) Veröffentlichungstag und Bekanntmachung des Hinweises auf die Patenterteilung: **24.01.2007**
(21) Anmeldenummer: 03027163.9
(22) Anmeldetag: 27.11.2003
(51) Int. Cl.: B60C 11/03, B60C 11/13

(54) **Fahrzeugluftreifen**
Pneumatic tire
Bandage pneumatique

(43) Veröffentlichungstag der Anmeldung: 01.06.2005
(73) Patentinhaber: Continental Aktiengesellschaft, 30165 Hannover (DE)
(72) Erfinder: Berkmann, Holger, 31241 Ilsede (DE); Breyhan, Thees Dr., 38274 Elbe (DE); Mauruschat, Rainer, 30826 Garbsen (DE)

(56) Entgegenhaltungen:
- EP-A- 0 602 971
- EP-A- 0 887 209
- EP-A- 1 361 075
- PATENT ABSTRACTS OF JAPAN vol. 014, no. 107 (M-0942), 27. Februar 1990 (1990-02-27) & JP 01 309806 A (YOKOHAMA RUBBER CO LTD:THE), 14. Dezember 1989 (1989-12-14)

## Beschreibung

Die Erfindung betrifft einen Fahrzeugluftreifen mit einem Laufstreifen, welcher durch breite und auf Dessintiefe reichende Umfangsnuten in Umfangsrichtung umlaufende Laufstreifenbänder gegliedert ist und welcher durch die Äquatorlinie in einen, bezogen auf das Fahrzeug, bei montiertem Reifen außenseitig gelegenen Außenabschnitt und in einen innenseitig gelegenen Innenabschnitt geteilt ist, wobei zumindest eines der im Innenabschnitt verlaufenden Laufstreifenbänder mit einer Blockstruktur überlagert ist, welche aus zwei in Umfangsrichtung gegeneinander versetzten Reihen von Blöcken besteht, wobei die Tiefe der die Blockstruktur bildenden Rillen und Quernuten geringer ist als die Tiefe der das Band begrenzenden Umfangsnuten.

Ein Reifen der eingangs genannten Art ist beispielsweise aus der EP 1 361 075 A bekannt. Dieser Reifen soll insbesondere für 4 WD-Fahrzeuge geeignet sein und gegenüber bekannten Reifen hinsichtlich Abrollgeräusch und bezüglich der Griffeigenschaften verbessert sein. Der Reifen ist dabei im Innen- und im Außenabschnitt übereinstimmend strukturiert und weist eine entlang des Reifenäquators verlaufende Blockreihe auf, an welche in jeder Laufstreifenhälfte je ein breites Laufstreifenband anschließt, welches mit einer Blockstruktur überlagert ist, die aus zwei in Umfangsrichtung gegeneinander versetzten Reihen von Blöcken besteht. An dieses schließen, durch breite Umfangsnuten getrennt, Schulterblockreihen an.

Es ist bekannt, für sehr hohe Fahrgeschwindigkeiten geeignete PKW - Radialreifen mit einem Laufstreifenprofil zu versehen, welches eine ausgeprägte Bandstruktur mit einer Anzahl, beispielsweise vier oder fünf, breiter und gerader Umfangsnuten aufweist. Bei einem derartigen bekannten Reifen erfolgt die Trennung zwischen dem Außen- und dem Innenabschnitt des Profils durch eine entlang der Äquatorlinie verlaufende Umfangsnut. Sowohl im Außen- als auch im Innenabschnitt sind jeweils Laufstreifenbänder vorgesehen, wobei die beiden schulterseitig gelegenen Bänder durch außerhalb der Laufstreifenränder beginnende und in den Bändern sacknutartig endende Quernuten gegliedert sind. Die im Innenabschnitt des Reifens verlaufenden beiden Laufstreifenbänder sind durch kurze, sacknutenartig endende Quernuten, die eine geringere Tiefe als die Umfangsnuten aufweisen, strukturiert. Diese Profilausgestaltung soll die für eine Hochgeschwindigkeitstauglichkeit erforderliche Profilsteifigkeit sicherstellen, was zusätzlich dadurch unterstützt wird, dass das Profil eine geringere Dessintiefe aufweist, als die üblichen Laufstreifenprofile für PKW Reifen. Der bekannte Reifen ist hinsichtlich seines Aquaplaningverhaltens und der Traktionseigenschaften auf trockenen und nassen Fahrbahnen verbesserungswürdig. Da bei Geradeausfahrt die Reifeninnenseite bei den üblichen Sturzeinstellungen der Fahrwerke höher belastet wird, wäre eine Verbesserung des Traktionsvermögens dieses Laufstreifenbereiches besonders wünschenswert, sollte jedoch nicht zu Lasten anderer Eigenschaften gehen.

Der Erfindung liegt daher die Aufgabe zu Grunde, einen Reifen der eingangs genannten Art hinsichtlich seines Traktionsvermögens, der Aquaplaningeigenschaften und der Hochgeschwindigkeitsbelastung zu verbessern.

Gelöst wird die gestellte Aufgabe erfindungsgemäß dadurch, dass der Außenabschnitt und der Innenabschnitt unterschiedlich strukturiert sind, indem das zumindest eine mit einer Blockstruktur überlagerte Laufstreifenband ausschließlich im Innenabschnitt angeordnet ist und der Außenabschnitt mit Ausnahme des Schulterbandes von Quernuten frei ist.

Die im normalen Fahrbetrieb bei Geradeausfahrt etwas höhere Belastung der Reifeninnenseite wird durch die Blockstruktur, die mit einer Verbesserung des Kühleffektes einhergeht, ausgeglichen. Die Blockstruktur verbessert ferner die Aquaplaningeigenschaften, erhöht die Anzahl der Griffkanten und führt daher zu einem besseren Traktionsvermögen auch auf schwierigen Straßenverhältnissen.

Die geringere Tiefe der die Blockstruktur bildenden Rillen gewährleistet weiterhin ein direktes Ansprechen des Reifens auf Lenkkräfte.

Bei einer bevorzugten Ausführungsform der Erfindung weist der Laufstreifen im Innenabschnitt zwei durch Umfangsnuten begrenzte Laufstreifenbänder auf, deren Bandstruktur durch eine erfindungsgemäß ausgeführte Blockstruktur überlagert ist.

Die beiden Reihen der Blöcke der Blockstruktur sind etwa gleich breit, nehmen gemeinsam die Breite des Laufstreifenbandes ein und bestehen aus Blöcken, deren Umfangserstreckung größer ist als ihre Quererstreckung. Durch diese Maßnahme wird ein guter Kühleffekt bei einer hohen Blocksteifigkeit, welche für die Hochgeschwindigkeitsbelastbarkeit von Vorteil ist, erzielt. In diesem Zusammenhang ist es auch von Vorteil, wenn die beiden Reihen von Blöcken durch eine schmale, insbesondere zirka 2 mm breite und 2 bis 3 mm tiefe Umfangsrille voneinander getrennt sind.

Um die Profilsteifigkeit auf erwünschte Weise zu vergleichmäßigen und die Aquaplaningeigenschaften zu verbessern ist es ferner von Vorteil, wenn die die Blöcke in Umfangsrichtung voneinander trennenden Quernuten eine in Richtung zu den Umfangsnuten größer werdende Tiefe und Breite aufweisen.

Die im Außenabschnitt des Laufstreifens vorgesehenen Laufstreifenbänder sind bevorzugt derart ausgeführt, dass sie im mittleren Bereich mit einer schmalen, etwa 2 mm breiten und 2 bis 3 mm tiefen und in Umfangsrichtung umlaufenden Umfangsrille versehen sind, welche in an die gewählte Pitchlängenvariation angepassten Abständen mit Erweiterungen versehen sind. Diese Erweiterungen gewährleisten eine für das Abrollgeräusch günstige Entlüftung der schmalen Umfangsrillen.

Weitere Merkmale, Vorteile und Einzelheiten der Erfindung werden anhand der Zeichnung, die Ausführungsbeispiele darstellt, näher beschrieben. Dabei zeigen

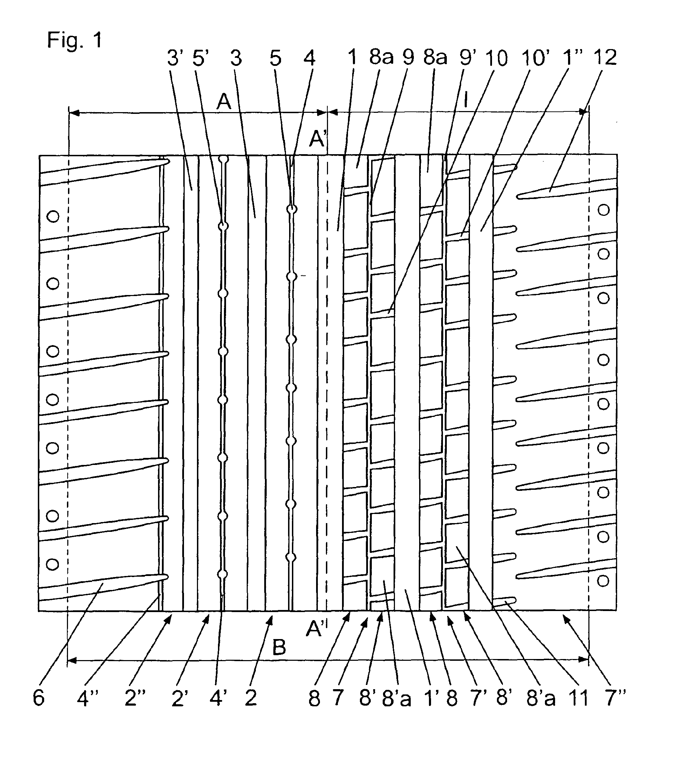

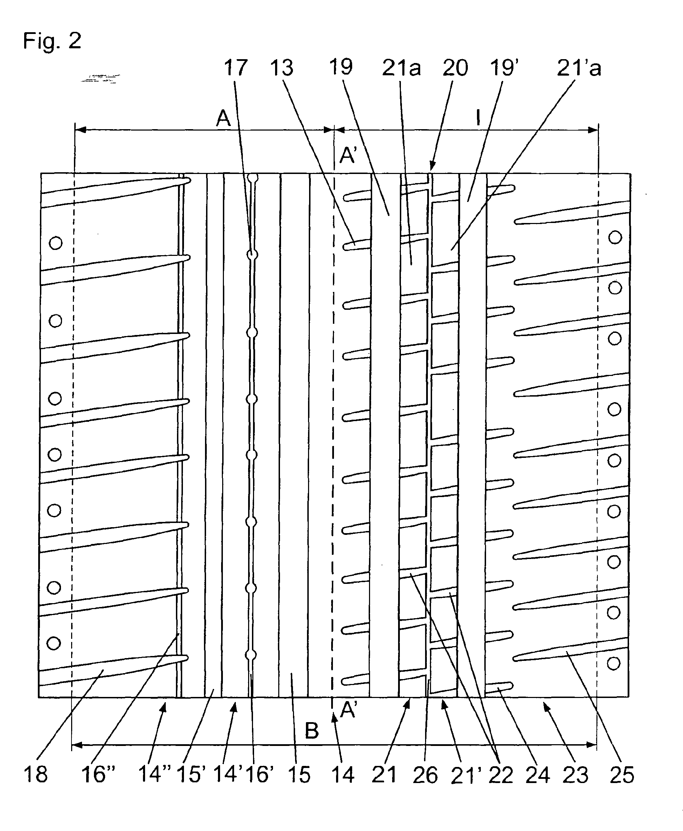

Fig.1 und Fig. 2 jeweils Draufsichten auf Teilabwicklungen von erfindungsgemäß ausgeführten Laufstreifen für Fahrzeugluftreifen.

Die gemäß der Erfindung ausgeführten Fahrzeugluftreifen sind PKW - Radialreifen, insbesondere Niederquerschnittsreifen, die für das Fahren bei sehr hohen Geschwindigkeiten geeignet sind. An die Laufstreifenprofile derartiger Reifen werden besondere Anforderungen gestellt.

Die in Fig. 1 und 2 gezeigten Laufstreifenprofile werden über die Breite B des Reifens in der Bodenaufstandsfläche betrachtet. Die Laufstreifenprofile sind axial in zwei unterschiedlich strukturierte Bereiche A, I aufgeteilt. Der Außenbereich A ist jener Bereich, welcher bei am Fahrzeug montierten Reifen an der Fahrzeugaußenseite liegen soll, der Innenbereich ist der Fahrzeuglängsachse zugewandt. Die Dessintiefe - die maximale Tiefe von Nuten und Rillen im Profil - ist bei erfindungsgemäß ausgeführten Reifen weniger als 8 mm, vorzugsweise in der Größenordnung von 6 mm, insbesondere 6 bis 7mm, und somit geringer als bei den üblichen, für niedrigere Geschwindigkeiten vorgesehenen PKW - Radialreifen. Die geringere Dessintiefe verbesserte die Belastbarkeit des Reifens bei hohen Geschwindigkeiten.

Bei der in Fig. 1 gezeigten Ausführungsform erfolgt die Trennung zwischen Außenbereich A und Innenbereich I durch eine breite, gerade, entlang der Äquatorlinie A'-A' in Umfangsrichtung umlaufende sowie auf Dessintiefe ausgeführte Umfangsnut 1. Der Laufstreifenaußenbereich A ist durch in Umfangsrichtung umlaufende Bänder 2, 2', 2", welche durch weitere, bis auf Dessintiefe reichende Umfangsnuten 3, 3' voneinander getrennt sind, gegliedert. Das der Äquatorlinie A'-A' benachbarte Laufstreifenband 2 und das auf dieses folgende Band 2' sind mittig jeweils mit einer in Umfangsrichtung umlaufenden schmalen Umfangsrille 4, 4' versehen. Auch das schulterseitig verlaufenden Laufstreifenband 2" ist mit einer schmalen Umfangsrille 4" versehen, die etwa im gleichen Abstand zur Umfangsnut 3' verläuft, wie die Umfangsrille 4' im Laufstreifenband 2'. Die Umfangsrillen 4, 4', 4" weisen eine Breite von etwa von 2 mm und eine Tiefe zwischen 2 und 3 mm, insbesondere von 2,5 mm, auf. Die beiden schmalen Umfangsrillen 4, 4' sind mit einer Vielzahl von Erweiterungen 5, 5' versehen, die in Draufsicht kreisförmig ausgeführt sind, einen Durchmesser von etwa 5 mm haben und eine Tiefe aufweisen, die mit der Tiefe der Umfangsrillen 4, 4' übereinstimmt. Die Erweiterungen 5, 5' sind in bestimmten Abständen vorgesehen, die gemäß der für den Außenabschnitt A gewählten Pitchlängenvariation gewählt sind.

Die schmale Umfangsrille 4" im Schulterband 2" wird von den Endbereichen von Schulterquernuten 6 gekreuzt, die jenseits des Laufstreifenbandes beginnen und im Kreuzungsbereich mit der Rille 4" seichter werden. Bei der dargestellten Ausführungsform schließen die Schulterquernuten 6 mit der Querrichtung einen spitzen Winkel von einigen Grad ein. Die gegenseitigen Abstände der Schulterquernuten 6 sind an die gewählte Pitchlängenvariation angepasst.

Im Laufstreifeninnenbereich I dominieren zwei auf besondere Weise in Blöcke 8a, 8'a gegliederte Bänder 7, 7', die von einander durch eine breite und in Umfangsrichtung umlaufende gerade Umfangsnut 1' getrennt sind. An das äußere Band 7' schließt ein Schulterband 7" an, welches durch eine weitere breite und in Umfangsrichtung umlaufende Umfangsnut 1" vom Band 7' getrennt ist. Die Blockstruktur ist der Bandstruktur der beiden Bänder 7, 7' quasi überlagert und besteht jeweils aus zwei Reihen 8, 8' von Blöcken 8a, 8'a, welche in Umfangsrichtung gegeneinander versetzt sind, im Wesentlichen rechteckförmig sind und eine Umfangserstreckung aufweisen, die ihre Quererstreckung deutlich übersteigt. Voneinander sind diese beiden Blockreihen 8, 8' durch jeweils eine schmale, etwa 2 mm breite und seichte, eine Tiefe zwischen 2 und 3 mm, insbesondere 2,5 mm, aufweisende Umfangsrille 9, 9' voneinander getrennt. In Umfangsrichtung sind die Blöcke 8a, 8'a durch Quernuten 10, 10' voneinander getrennt, die im Wesentlichen in der Querrichtung des Laufstreifens verlaufen und von den Umfangsrillen 9, 9' in Richtung zu den Umfangsnuten 1, 1', 1" kontinuierlich breiter und tiefer werden. Die Tiefe der Quernuten 10, 10' ist im Bereich der Umfangsrillen 9, 9' gleich zu jener der Rillen 9, 9', im Bereich der Umfangsnuten 1, 1', 1" etwas geringer als die Dessintiefe.

Das Schulterband 7" ist durch in Querrichtung verlaufende Sacknuten 11, die von der Umfangsnut 1" ausgehen, und durch weitere Sacknuten 12, die jenseits des Laufsteifenrandes beginnen und in das Schulterband 7" verlaufen, gegliedert. Die Sacknuten 11 sind seichter ausgeführt als die Dessintiefe, die Sacknuten 12 sind über einen Großteil ihrer Erstreckung auf Dessintiefe ausgeführt.

Auch die Profilstrukturen im Innenbereich des Laufstreifens sind gemäß dem Verfahren der Pitchlängenvariation geräuschmäßig optimiert ausgeführt und angeordnet, sodass die Blöcke 8a, 8'a unterschiedliche Umfangslängen und die Sacknuten 11, 12 variierende Abstände voneinander aufweisen.

Bei dem in Fig. 2 gezeigten Laufstreifenprofil erstreckt sich entlang der Äquatorlinie A'-A' ein Laufstreifenband 14. Dieses ist in seinem den Innenbereich I des Laufstreifens zugehörigen Teilbereich durch in Querrichtung verlaufende Sacknuten 13 gegliedert, die eine geringere Tiefe aufweisen als die Dessintiefe. Im Außenbereich A des Laufstreifens schließt an das mittige Laufstreifenband 14 eine gerade, in Umfangsrichtung umlaufende und auf Dessintiefe reichende breite Umfangsnut 15 an, an welche ein weiteres Laufstreifenband 14' anschließt, welches durch eine weitere gerade in Umfangsrichtung umlaufende und auf Dessintiefe reichende Umfangsnut 15' von einem Schulterband 14" getrennt ist. Das Laufstreifenband 14' ist analog ausgeführt zu den Laufstreifenbändern 2, 2' der Ausführungsform gemäß Fig. 1 und weist daher eine schmale, etwa 2 mm breite und vorzugsweise 2,5 mm tiefe Umfangsrille 16' auf, welche durch eine Vielzahl von Erweiterungen 17', wie oben beschrieben, unterbrochen ist. Die Ausführung des Schulterbandes 14" mit einer Umfangsrille 16" und Quernuten 18 entspricht jener des Schulterbandes 2" der Ausführungsform gemäß Fig. 1.

Die im Außenbereich A des Laufstreifens gewählte bzw. vorgesehene Pitchlängenvariation betrifft daher bei dieser Ausführungsform die Anordnung der Erweiterungen 17' und die gegenseitigen Abstände der Quernuten 18.

Die Sacknuten 13 des entlang der Äquatorlinie A-A verlaufenden Laufstreifenbandes 14 sind bevorzugt derart ausgeführt, dass sie im Bereich ihrer geschlossenen Enden keine nennenswerte Triefe aufweisen, ihre Tiefe jedoch in Richtung der das Band 14 begrenzenden Umfangsnut 19 größer wird, Dessintiefe aber nicht erreicht. An die auf Dessintiefe reichende Umfangsnut 19 schließt ein Band 20 an, auf welches eine weitere breite und auf Dessintiefe reichende Umfangsnut 19' folgt und welches in analoger Weise wie die Bänder 7, 7' der Ausführungsform gemäß Fig. 1 in zwei Blockreihen 21, 21' gegliedert ist. Die Blöcke 21 a, 21'a sind daher durch Quernuten 22 mit zu den Umfangsnuten 19, 19' zunehmender Tiefe voneinander getrennt. Das von der Umfangsnut 19' begrenzte Schulterband 23 ist analog zum Schulterband 7" der Ausführungsform gemäß Fig. 1 durch Sacknuten 24, 25 strukturiert.

Die im Innenbereich I vorgesehenen Profilstrukturen sind ferner ebenfalls gemäß dem Verfahren der Pitchlängenvariation geräuschoptimiert ausgeführt und angeordnet.

Die Erfindung ist auf die dargestellten Ausführungsformen nicht eingeschränkt. Die gemäß der Erfindung vorgesehene Bandstruktur im Außenbereich und die Band/Blockstruktur im Innenbereich eines Laufstreifenprofils kann auch auf andere Weise realisiert werden.

## Patentansprüche

1. Fahrzeugluftreifen mit einem Laufstreifen, welcher durch breite und auf Dessintiefe reichende Umfangsnuten (1, 1', 1", 3, 3', 15, 15', 19, 19') in in Umfangsrichtung umlaufende Laufstreifenbänder (2, 2', 2", 7, 7', 7", 14, 14', 14", 20, 23) gegliedert ist und welcher durch die Äquatorlinie (A-A, A'-A') in einen, bezogen auf das Fahrzeug, bei montiertem Reifen außenseitig gelegenen Außenabschnitt und in einen innenseitig gelegenen Innenabschnitt geteilt ist, wobei zumindest eines der im Innenabschnitt (I) verlaufenden Laufstreifenbänder (7, 7', 21) mit einer Blockstruktur überlagert ist, welche aus zwei in Umfangsrichtung gegeneinander versetzten Reihen von Blöcken (8a, 8'a, 21 a, 21'a) besteht, wobei die Tiefe der die Blockstruktur bildenden Rillen (9, 9', 26) und Quernuten (10, 10', 22) geringer ist als die Tiefe der das Band (7, 7', 20) begrenzenden Umfangsnuten (1, 1', 1", 19, 19'),
**dadurch gekennzeichnet,**
**dass** der Außenabschnitt (A) und der Innenabschnitt (I) unterschiedlich strukturiert sind, indem das zumindest eine mit einer Blockstruktur überlagerte Laufstreifenband (7, 7, 21) ausschließlich im Innenabschnitt (I) angeordnet Ist und der Außenabschnitt (A) mit Ausnahme des Schulterbandes (2", 14") von Quernuten frei ist.

2. Fahrzeugluftreifen nach Anspruch 1 mit zwei durch Umfangsnuten begrenzten Laufstreifenbändern im Innenabschnitt, **dadurch gekennzeichnet, dass** die Bandstruktur beider Laufstreifenbänder (7, 7') durch eine Blockstruktur überlagert ist.

3. Fahrzeugluftreifen nach Anspruch 1 oder 2, **dadurch gekennzeichnet, dass** die beiden Reihen von Blöcken (8a, 8'a, 21 a, 21'a) etwa gleich breit sind, gemeinsam die Breite des Laufstreifenbandes (7, 7', 20) einnehmen und aus Blöcken (8a, 8'a, 21 a, 21'a) bestehen, deren Umfangserstreckung größer ist als ihre Quererstreckung.

4. Fahrzeugluftreifen nach einem der Ansprüche 1 bis 3, **dadurch gekennzeichnet, dass** die beiden Reihen von Blöcken (8a, 8'a, 21 a, 21'a) durch eine schmale, insbesondere zirka 2 mm breite und 2 bis 3 mm tiefe Umfangsrille (9, 9', 26) voneinander getrennt sind.

5. Fahrzeugluftreifen nach einem der Ansprüche 1 bis 4, **dadurch gekennzeichnet, dass** die die Blöcke (8a, 8'a, 21 a, 21'a) in Umfangsrichtung voneinander trennenden Quernuten (10, 10', 22) eine in Richtung zu den Umfangsnuten (1, 1', 1", 19, 19') größer werdende Tiefe aufweisen.

6. Fahrzeugluftreifen nach einem der Ansprüche 1 bis 5, **dadurch gekennzeichnet, dass** die die Blöcke (8a, 8'a, 21 a, 21'a) in Umfangsrichtung voneinander trennenden Quernuten (10, 10', 22) eine in Richtung zu den Umfangsnuten (1, 1', 1", 19, 19') größer werdende Breite aufweisen.

7. Fahrzeugluftreifen nach einem der Ansprüche 1 bis 5, **dadurch gekennzeichnet, dass** im Außenabschnitt (A) des Laufstreifens zumindest ein beidseitig durch Umfangsnuten (1, 3, 3', 15, 15') begrenztes Laufstreifenband (2, 2', 14) verläuft, welches im mittleren Bereich mit einer schmalen, etwa 2 mm breiten und 2 bis 3 mm tiefen und in Umfangsrichtung umlaufenden Umfangsrille (4, 4', 16') versehen ist, welche in an die gewählte Pitchlängenvariation angepassten Abständen mit Erweiterungen (5, 5', 17') versehen ist.

8. Fahrzeugluftreifen nach einem der Ansprüche 1 bis 7, **dadurch gekennzeichnet, dass** die Tiefe der Umfangsnuten (1, 1', 1", 19, 19', 3, 3', 15, 15') in der Größenordnung von 6 mm beträgt, insbesondere zwischen 6 und 7 mm gewählt wird.

## Claims

1. Pneumatic vehicle tyre with a tread rubber, which is divided by wide circumferential grooves (1, 1', 1'', 3, 3', 15, 15', 19, 19'), reaching to the depth of tread, into tread rubber strips (2, 2', 2'', 7, 7', 7'', 14, 14', 14'', 20, 23) running around in the circumferential direction, and which is divided by the equator line (A-A, A'-A') into an outer portion and an inner portion, respectively situated on the outer side and inner side with respect to the vehicle when the tyre is fitted, at least one of the tread rubber strips (7, 7', 21) that runs in the inner portion (I) being superposed with a block structure which comprises two rows of blocks (8a, 8'a, 21a, 21'a) offset with respect to each other in the circumferential direction, the depth of the channels (9, 9', 26) and transverse grooves (10, 10', 22) forming the block structure being less than the depth of the circumferential grooves (1, 1', 1'', 19, 19') delimiting the strip (7, 7', 20), **characterized in that** the outer portion (A) and the inner portion (I) are differently structured, **in that** the at least one tread rubber strip (7, 7', 21) superposed with a block structure is arranged exclusively in the inner portion (I), and the outer portion (A) is free from transverse grooves with the exception of the shoulder strip (2", 14").

2. Pneumatic vehicle tyre according to Claim 1, with two tread rubber strips in the inner portion, delimited by circumferential grooves, **characterized in that** the strip structure of the two tread rubber strips (7, 7') is superposed by a block structure.

3. Pneumatic vehicle tyre according to Claim 1 or 2, **characterized in that** the two rows of blocks (8a, 8'a, 21a, 21'a) are approximately of the same width, together take up the width of the tread rubber strip (7, 7', 20) and comprise blocks (8a, 8'a, 21a, 21'a) of a greater circumferential extent than transverse extent.

4. Pneumatic vehicle tyre according to one of Claims 1 to 3, **characterized in that** the two rows of blocks (8a, 8'a, 21a, 21'a) are separated from each other by a narrow circumferential channel (9, 9', 26), in particular about 2 mm wide and 2 to 3 mm deep.

5. Pneumatic vehicle tyre according to one of Claims 1 to 4, **characterized in that** the transverse grooves (10, 10', 22) separating the blocks (8a, 8'a, 21a, 21'a) from one another in the circumferential direction have a depth which becomes greater in the direction of the circumferential grooves (1, 1', 1'', 19, 19').

6. Pneumatic vehicle tyre according to one of Claims 1 to 5, **characterized in that** the transverse grooves (10, 10', 22) separating the blocks (8a, 8'a, 21a, 21'a) from one another in the circumferential direction have a width which becomes greater in the direction of the circumferential grooves (1, 1', 1'', 19, 19').

7. Pneumatic vehicle tyre according to one of Claims 1 to 5, **characterized in that** at least one tread rubber strip (2, 2', 14), delimited on both sides by circumferential grooves (1, 3, 3', 15, 15'), runs in the outer portion (A) of the tread rubber, which strip is provided in the central region with a narrow circumferential channel (4, 4', 16'), which is approximately 2 mm wide and 2 to 3 mm deep, runs around in the circumferential direction and is provided with widenings (5, 5', 17') at intervals adapted to the chosen pitch length variation.

8. Pneumatic vehicle tyre according to one of Claims 1 to 7, **characterized in that** the depth of the circumferential grooves (1, 1', 1'', 19, 19', 3, 3', 15, 15') is of the order of magnitude of 6 mm, in particular is chosen to be between 6 and 7 mm.

## Revendications

1. Bandage pneumatique pour véhicule comprenant une bande de roulement qui est divisée par des rainures périphériques larges et s'étendant sur la profondeur du dessin (1, 1', 1", 3, 3', 15, 15', 19, 19') en des rubans de bande de roulement (2, 2', 2", 7, 7', 7", 14, 14', 14", 20, 23) s'étendant tout autour dans la direction périphérique, et qui est divisée par une ligne équatoriale (A-A, A'-A') en une portion extérieure située du côté extérieur lorsque le pneu est monté, par rapport au véhicule, et en une portion intérieure située du côté intérieur, au moins l'un des rubans de la bande de roulement (7, 7', 21) s'étendant dans la portion intérieure (I) étant recouvert par une structure en bloc, qui se compose de deux rangées de blocs (8a, 8'a, 21a, 21'a) décalées l'une par rapport à l'autre dans la direction périphérique, la profondeur des gorges (9, 9', 26) formant la structure en bloc et des rainures transversales (10, 10', 22) étant plus petite que la profondeur des rainures périphériques (1, 1', 1", 19, 19') limitant le ruban (7, 7', 20),
**caractérisé en ce que**
la portion extérieure (A) et la portion intérieure (I) sont structurées différemment, **en ce que** le ruban de la bande de roulement (7, 7', 21) recouvert d'au moins une structure en bloc est disposé exclusivement dans la portion intérieure (I) et que la portion extérieure (A) est exempte de rainures transversales à l'exception de la bande d'épaulement (2", 14").

2. Bandage pneumatique pour véhicule selon la revendication 1, comprenant deux rubans de bande de roulement limités par des rainures périphériques dans la portion intérieure, **caractérisé en ce que** la structure de bande des deux rubans de bande de roulement (7, 7') est recouverte par une structure en bloc.

3. Bandage pneumatique pour véhicule selon la revendication 1 ou 2, **caractérisé en ce que** les deux rangées de blocs (8a, 8'a, 21a, 21'a) ont approximativement la même largeur, ont ensemble la largeur du ruban de la bande de roulement (7, 7', 20) et se composent des blocs (8a, 8'a, 21a, 21'a) dont l'étendue périphérique est supérieure à leur étendue transversale.

4. Bandage pneumatique pour véhicule selon l'une quelconque des revendications 1 à 3, **caractérisé en ce que** les deux rangées de blocs (8a, 8'a, 21a, 21'a) sont séparées l'une de l'autre par une gorge périphérique étroite (9, 9', 26) notamment d'environ 2 mm de large et de 2 à 3 mm de profondeur.

5. Bandage pneumatique pour véhicule selon l'une quelconque des revendications 1 à 4, **caractérisé en ce que** les rainures transversales (10, 10', 22) séparant les uns des autres les blocs (8a, 8'a, 21a, 21'a) dans la direction périphérique présentent une profondeur de plus en plus grande dans la direction des rainures périphériques (1, 1', 1", 19, 19').

6. Bandage pneumatique pour véhicule selon l'une quelconque des revendications 1 à 5, **caractérisé en ce que** les rainures transversales (10, 10', 22) séparant les uns des autres les blocs (8a, 8'a, 21a, 21'a) dans la direction périphérique présentent une largeur de plus en plus grande dans la direction des rainures périphériques (1, 1', 1", 19, 19').

7. Bandage pneumatique pour véhicule selon l'une quelconque des revendications 1 à 5, **caractérisé en ce que** dans la portion extérieure (A) de la bande de roulement s'étend au moins un ruban de bande de roulement (2, 2', 14) limité des deux côtés par des rainures périphériques (1, 3, 3', 15, 15'), qui est pourvu dans la région centrale d'une gorge périphérique (4, 4', 16') étroite, d'environ 2 mm de large et de 2 à 3 mm de profondeur et s'étendant tout autour dans la direction périphérique, qui est pourvue d'élargissements (5, 5', 17') à des intervalles adaptés à la variation de longueur de pas choisie.

8. Bandage pneumatique pour véhicule selon l'une quelconque des revendications 1 à 7, **caractérisé en ce que** la profondeur des rainures périphériques (1, 1', 1", 19, 19', 3, 3', 15, 15') est choisie de l'ordre de 6 mm, notamment est comprise entre 6 et 7 mm.
